## Europäisches Patentamt

## European Patent Office

## Office européen des brevets

(19)

(11) Numéro de publication: **0 211 736**
**B1**

(12) **FASCICULE DE BREVET EUROPEEN**

(45) Date de publication du fascicule du brevet:
14.09.88

(51) Int. Cl.⁴: **F 16 C 11/06**

(21) Numéro de dépôt: 86401599.5

(22) Date de dépôt: 17.07.86

(54) Articulation à rotule sans jeu.

(30) Priorité: 18.07.85 FR 8511271

(43) Date de publication de la demande:
25.02.87 Bulletin 87/9

(45) Mention de la délivrance du brevet:
14.09.88 Bulletin 88/37

(84) Etats contractants désignés:
DE GB IT

(56) Documents cités:
FR - A - 2 395 161
GB - A - 607 709
GB - A - 1 056 728
GB - A - 1 564 539
US - A - 1 554 757
US - A - 3 299 721
US - A - 3 507 527

(73) Titulaire: **AUTOMOBILES PEUGEOT, 75, avenue de la Grande Armée, F-75116 Paris (FR)**
Titulaire: **AUTOMOBILES CITROEN, 62 Boulevard Victor-Hugo, F-92200 Neuilly-sur-Seine (FR)**

(72) Inventeur: **Coffy, Didier Jean Raymond, 63, rue de la Porte de Paris, F-78460 Chevreuse (FR)**

(74) Mandataire: **Boivin, Claude, 9, rue Edouard-Charton, F-78000 Versailles (FR)**

ACTORUM AG

## Description

La présente invention concerne une articulation à rotule destinée à relier deux pièces l'une à l'autre et comprenant d'une part un élément mâle propre à être fixé à l'une des pièces et comportant en saillie une portion sphérique, et d'autre part un élément femelle propre à être fixé sur l'autre pièce et formé de deux parties qui présentent chacune un embouti en forme de portion de sphère, les deux emboutis emprisonnant la portion sphérique de l'élément mâle (voir par exemple GB-A-607 709). Elle a plus particulièrement pour objet une articulation de ce genre qui est exempte de jeu et d'un coût de montage réduit.

L'articulation selon l'invention est caractérisée en ce que l'élément femelle est formé de deux équerres dont les deux ailes forment l'une avec l'autre, avant montage, un angle inférieur à 90°, l'une des ailes de chaque équerre étant une aile de fixation alors que la seconde aile présente l'embouti en forme de portion de sphère, et en ce que, après montage, les ailes de fixation des équerres sont adjacentes et dans le prolongement l'une de l'autre et que leurs dites secondes ailes sont appliquées l'une sur l'autre et fixées l'une à l'autre.

Pour le montage il suffit de fixer l'élément mâle et chacune des équerres sur les pièces à relier, d'introduire la portion sphérique de l'élément mâle entre les emboutis des deux équerres, et enfin d'appliquer l'une sur l'autre des ailes des équerres comportant ces emboutis et de les fixer l'une à l'autre.

L'articulation à rotule selon l'invention est particulièrement utilisable comme charnière de porte de véhicule, comme charnière de capot ou de volet, ou comme articulation de sièges, de portillons ou de toits ouvrants.

On a décrit ci-après, à titre d'exemple non limitatif, un mode de réalisation de l'articulation à rotule selon l'invention, avec référence au dessin annexé dans lequel:

La figure 1 est une vue en perspective montrant séparés les éléments de l'articulation;

la figure 2 montre en coupe ces éléments fixés sur les pièces à relier, avant leur assemblage;

la figure 3 est une vue semblable à la figure 2, après assemblage.

Telle qu'elle est représentée au dessin, l'articulation à rotule selon l'invention comprend un élément mâle 1 et un élément femelle 2.

L'élément mâle 1 est en matière moulée, métal ou matière plastique, et comprend une plaque ou platine 3 qui peut être fixée par exemple par des vis à une pièce 4 devant être reliée à une pièce 5. Cette plaque fait corps avec une tige 6 qui s'étend sensiblement perpendiculairement à elle et est terminée par une portion sphérique 7.

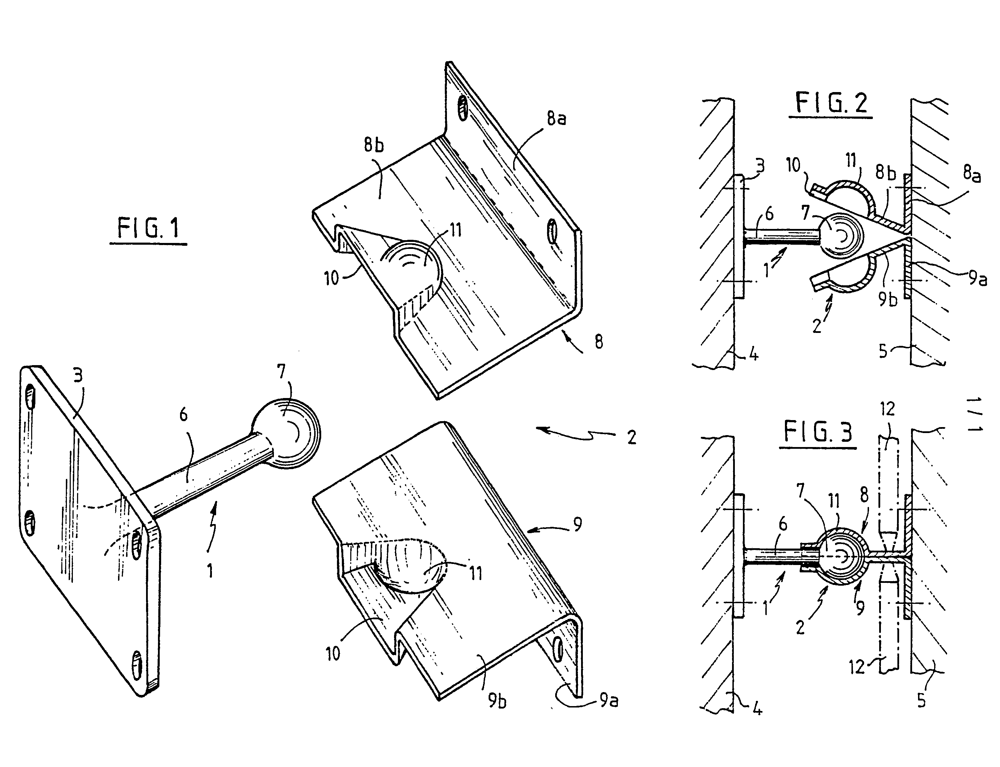

L'élément femelle est constitué de deux équerres 8 et 9 dont une des ailes 8a ou 9a est fixée, par exemple par vissage, à la pièce 5, les ailes 8a et 9a étant adjacentes et dans le prolongement l'une de l'autre (Figure 2). L'autre aile 8b ou 9b de chacune de ces équerres fait avec la première aile 8a ou 9a un angle qui est initialement inférieur à 90° et présente dans la partie médiane un embouti de forme trapézoïdale 10 terminé par une portion hémisphérique 11 ayant sensiblement même rayon que la portion sphérique 7.

Pour monter la rotule, on engage la portion sphérique 7 entre les deux emboutis 11, on rapproche les deux ailes 8b et 9b de façon à les appliquer l'une sur l'autre, en les amenant perpendiculairement aux ailes 8a et 9a, les emboutis 11 emprisonnant la portion sphérique 7 (Figure 3), et on fixe ces ailes 8b et 9b l'une à l'autre par deux points de soudure, par exemple à l'aide d'électrodes 12. On ne sortirait pas du cadre de l'invention en fixant les ailes 8b et 9b par des vis, des boulons ou des rivets.

## Revendications

1. Articulation à rotule destinée à relier deux pièces (4 et 5) l'une à l'autre et comprenant d'une part un élément mâle (1) propre à être fixé à l'une des pièces et comportant en saillie une portion sphérique (7), et d'autre part un élément femelle (2) propre à être fixé sur l'autre pièce et formé de deux parties qui présentent chacune un embouti (11) en forme de portion de sphère, les deux emboutis (11) emprisonnant la portion sphérique (7) de l'élément mâle (1), caractérisée en ce que l'élément femelle (2) est formé de deux équerres (8 et 9) dont les deux ailes (8a-8b et 9a-9b) forment l'une avec l'autre, avant montage, un angle inférieur à 90°, l'une (8a ou 9a) des ailes de chaque équerre étant une aile de fixation alors que la seconde aile (8b ou 9b) présente l'embouti, en forme de portion de sphère (11), et en ce que, après montage, les ailes de fixation (8a et 9a) des équerres sont adjacentes et dans le prolongement l'une de l'autre et des leurs dites secondes ailes (8b et 9b) sont appliquées l'une sur l'autre et fixées l'une à l'autre.

2. Articulation à rotule selon la revendication 1, caractérisée en ce que l'élément mâle (1) comprend une platine de fixation (3) faisant corps avec une tige (6) qui s'étend sensiblement perpendiculairement à elle et est terminée par la portion sphérique.

3. Articulation à rotule selon la revendication 1 ou 2, caractérisée en ce que ladite seconde aile (8b ou 9b) de chaque équerre présente un embouti (10) de forme trapézoïdale terminé à son extrémité interne par l'embouti (11) en forme de portion de sphère.

## Patentansprüche

1. Kugelgelenk, welches zur Verbindung zweier Teile (4 und 5) aneinander bestimmt ist und einerseits ein männliches Element (1) enthält, das zur Befestigung an dem einen der Teile geeignet ist und einen vorspringenden kugelförmigen Bereich (7) aufweist, und andererseits ein weibliches Element (2) enthält, das zur Befestigung an dem anderen Teil geeignet ist und aus zwei Bauteilen besteht, die jeweils eine Aushöhlung (11) in Form eines Kugelabschnittes aufweisen, wobei die beiden Aushöhlungen (11) den kugelförmigen Bereich (7) des männlichen Elementes (1) umschliessen, dadurch gekennzeichnet, dass das weibliche Element (2) aus zwei Winkeln (8 und 9) besteht, von denen die beiden Schenkel (8a-8b und 9a-9b) vor der Montage miteinander einen Winkel bilden, der kleiner als 90° ist, wobei der eine (8a oder 9a) der Schenkel jedes Winkels ein Befestigungsschenkel ist, während der zweite Schenkel (8b oder 9b) die Aushöhlung in Form eines Kugelabschnittes (11) aufweist, und dass nach der Montage die Befestigungsschenkel (8a und 9a) der Winkel aneinanderstossen und der eine in der Verlängerung des anderen liegt und ihre zweiten Schenkel (8b und 9b) aneinandergelegt und aneinander befestigt sind.

2. Kugelgelenk nach Anspruch 1, dadurch gekennzeichnet, dass das männliche Element (1) eine Befestigungsplatte (3) aufweist, die mit einer Stange (6) eine Einheit bildet, wobei diese sich annähernd senkrecht zu ihr erstreckt und im kugelförmigen Bereich endet.

3. Kugelgelenk nach Anspruch 1 oder 2, dadurch gekennzeichnet, dass der zweite Schenkel (8b oder 9b) jedes Winkels eine trapezförmige Aushöhlung (10) aufweist, die an ihrem inneren Ende in der Aushöhlung (11) in Form eines Kugelabschnittes endet.

**Claims**

1. Ball joint connection intended to connect two parts (4 and 5) together and comprising a male element (1) adapted to be fixed to one of the parts and comprising a spherical projecting portion (7), and a female element (2) adapted to be fixed to the other part and formed of two parts which each have a stamping (11) in the shape of a sphere portion, the two stampings (11) imprisoning the spherical portion (7) of the male element (1), characterized in that the female element is formed of two brackets (8 and 9) whose two flanges (8a-8b and 9a-9b) form an angle less than 90° with each other, before assembly, one (8a or 9a) of the flanges of each bracket being a fixing flange whereas the second flange (8b or 9b) has the sphere portion shaped stamping (11) and, in that, after assembly, the fixing flanges (8a and 9a) of the brackets are adjacent and in the extension of each other and their said second flanges (8b and 9b) are applied against each other and fixed to each other.

2. Ball joint connection according to claim 1, characterized in that the male element (1) comprising a fixing plate (3) formed integrally with a rod (6) which extends substantially perpendicularly thereto and ends in the spherical portion.

3. Ball joint connection according to claim 1 or 2, characterized in that said second flange (8b or 9b) of each bracket has a trapezoidal shaped stamping (10) ending at its internal end in the stampings in the shape of a sphere portion.

1 / 1

**FIG.2**

**FIG.3**

**FIG.1**